# EUROPÄISCHE PATENTSCHRIFT

(11) **EP 3 561 621 B1**
(45) Veröffentlichungstag und Bekanntmachung des Hinweises auf die Patenterteilung: **04.01.2023**
(21) Anmeldenummer: 18169487.8
(22) Anmeldetag: 26.04.2018
(51) Int. Cl.: G05B 19/414, G05B 19/4103

(54) **BESTIMMEN EINES ANGEPASSTEN LEITWERTES EINER LEITACHSE**
DETERMINATION OF AN ADAPTED LEADING VALUE
DÉTERMINATION D'UNE VALEUR DIRECTRICE AJUSTÉE

(43) Veröffentlichungstag der Anmeldung: 30.10.2019
(73) Patentinhaber: Siemens Aktiengesellschaft, 80333 München (DE)
(72) Erfinder: Kram, Raimund, 91056 Erlangen (DE)

(56) Entgegenhaltungen:
- EP-A1- 1 837 727
- EP-A2- 1 906 283
- WO-A1-03/100536
- DE-A1- 10 104 795
- US-A1- 2002 003 416
- US-A1- 2003 191 544

## Beschreibung

Die Erfindung betrifft ein Verfahren zum Bestimmen eines angepassten Leitwertes einer Leitachse für das Ausführen einer Gleichlauffunktion sowie eine dazugehörige Steuerungskomponente.

In vielen Anwendungsbereichen in der Industrieautomatisierung sind mehrere Antriebsachsen beteiligt. Beispielsweise sind mehrere Achsen zu synchronisieren oder aufeinander abzustimmen, um ein präzises Bewegen, Verarbeiten oder Bearbeiten zu erreichen. In Bearbeitungsmaschinen oder Produktionsmaschinen oder seltener auch Werkzeugmaschinen und insbesondere bei Druckmaschinen sind zwei oder mehr Achsen beispielsweise derart aufeinander abzustimmen, dass ein Gleichlauf erzielt wird. Beispielsweise sind im Gleichlaufverbund arbeitende Achsen im Bereich von Druckmaschinen nötig für technologische Aufgabenstellungen wie beispielsweise die Farbenaufbringung über Druckwalzen sowie das Zuschneiden und Falten über Falzapparate oder eine fliegende Schere im Umfeld von Verpackungsmaschinen oder in anderen Anwendungen einen Querschneider.

Die Idee des Gleichlaufes besteht dabei darin, dass eine Position einer Folgeachse unter Einhaltung des Gleichlaufgesetzes mit der Position einer Leitachse möglichst gut oder möglichst exakt übereinstimmt. Ein solcher Gleichlauf soll flexibel sowohl in einheitlichen Systemen, in welchen Achsen bzw. die Sollwerte, welche an den jeweiligen Achsen vorgegeben werden, innerhalb einer Steuerung berechnet werden, als auch in nicht-einheitlichen Systemen, bei welchen beispielsweise ein verteilter Gleichlauf vorliegt. Beim verteilten Gleichlauf werden verschiedene Achsen bzw. deren Sollwerte in verschiedenen Steuerungskomponenten berechnet, welche über einen gemeinsamen Bus kommunizieren. Ferner können nichteinheitliche Systeme durch unterschiedliche Berechnungstakte für unterschiedliche Achsen innerhalb einer Steuerungskomponente entstehen. Ferner kann auch bei unterschiedlichen dynamischen Eigenschaften verschiedener Achsen von einem nicht-einheitlichen System gesprochen werden.

In bekannten Lösungen wurde bislang zur Berechnung des Gleichlaufs je Gleichlauffunktion auf Sollwerte bzw. Sollpositionen an der nächsten Interpolationstaktgrenze der Folgeachse abgestellt. Der Interpolationstakt ist dabei der Takt, mit dem jeweils neue Sollwerte berechnet werden. Entsprechend werden die Sollwerte über einen Takt lang ausgegeben oder über einen Takt hinweg vorgegeben. Ein berechneter Sollwert wird über einen nächsten Takt ausgegeben, bis ein neuer Sollwert berechnet wurde und vorliegt. Der Zeitpunkt, an dem ein aktueller Interpolationstakt endet und ein nachfolgender Interpolationstakt beginnt, wird als Interpolationstaktgrenze bezeichnet.

Für Anwendungen, in welchen Achsen durch verschiedene Steuerungskomponenten angesteuert werden, wurden bislang die Taktversätze zwischen Steuerungskomponenten durch Analyse übertragener Daten aufwendig ermittelt, der Leitwert um den Taktversatz angepasst und dann der Sollwert der Folgeachse für die nächste Interpolatortaktgrenze berechnet.

Die US-Offenlegungsschrift US20020003416A1 zeigt eine numerische Steuerung mit einer Synchronisationsmanagementsteuerungseinheit, welche die Synchronisation mehrere Achsen organisiert. Dabei berechnet eine Positionsberechnungseinheit einer Synchronisationsachse einen Positionsbefehl der Synchronisationsachse, indem sie einen Bewegungstakt der Referenzachse zur Referenzposition der Synchronisierungsachse addiert.

Die US-Offenlegungsschrift US20030191544A1 zeigt eine Methode zur Antriebssynchronisation bei einem Masterantrieb mit mehreren Slaveantrieben. Die Slaveantriebe werden hinsichtlich einer Rotationsgeschwindigkeit sowie einer Winkeleinstellung synchronisiert, wobei Betriebswerte des Masters verwendet werden und eine Synchronisationsfunktion je Slaveantrieb ermittelt wird. Es werden mit der Synchronisationsfunktion Master-Synchron-Betriebswerte für jeden Antrieb ermittelt.

Die europäische Patentanmeldung mit der Offenlegungsnummer EP 1 837 727 A1 zeigt ein selbstsynchrones AC-Servosystem für serielle Hochgeschwindigkeitskommunikation mit mehreres Achssteuerungen. Jeder Antrieb beurteilt, ob ein empfangener Befehl für ihn selbst bestimmt ist, je nach einer durch Master- und Slave- Achsantrieben gesendeten Unterbrechungsanforderung und speichert eine Vielzahl von Computerbefehlen in einer Warteschlange. Jeder Antrieb treibt einen Master- oder Slave-Achsenmotor durch den Befehl in der Warteschlange synchron nach einem synchronen Zeittakt.

Die Offenlegungsschrift DE 101 04 795 A1 offenbart, eine Slaveachse mit einem Wert anzusteuern, der dieser vortäuscht, dass die Leitachse sich bereits weiter als in Wirklichkeit gedreht hat. Dies kann durch Addition eines Korrekturwinkels auf den gemessenen Winkel der Leitachse erreicht werden. Um das virtuelle Weiterdrehen so zu gestalten, dass dadurch gerade ein Schleppfehler der Slaveachse kompensiert wird, werden Leitachswinkel um jeweilige zur Winkelgeschwindigkeit der Leitachse proportionale, mit der Datenlaufzeit des Lageistwertes der Leitachse und der Verzögerung der Lageregelung der Slaveachse gewichtete Korrekturwinkel vergrößert.

Vor diesem Hintergrund ist es eine Aufgabe der vorliegenden Erfindung einen Gleichlauf zwischen einer Leit- und mindestens einer Folgeachse zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Bestimmen eines angepassten Leitwertes einer Leitachse, wobei aus dem angepassten Leitwert mittels einer Gleichlauffunktion ein Folgesollwert für eine Folgeachse ableitbar ist und anhand des Folgesollwertes ein Antrieb an der Folgeachse im Gleichlauf mit der Leitachse betrieben wird, wobei der angepasste Leitwert basierend auf einem Basisleitwert der Leitachse und einer Zeitdifferenz von Wirkzeitpunkten festlegbarer Ereignisse an der Leitachse und Folgeachse bestimmt wird.

Der von der Leitachse vorliegende Basis-Leitwert wird somit auf einen zu einem anderen Zeitpunkt zugehörigen Leitwert angepasst, und dieser Zeitpunkt wird aus einer zeitlichen Differenz von gleichartigen Wirkzeitpunkten an der Leitachse und der Folgeachse bestimmt. Die Wirkzeitpunkte wiederum sind durch festlegbare Ereignisse an der Leitachse und Folgeachse bestimmt.

Es wird somit nicht ein vorhandener Basisleitwert als Leitwert verwendet, sondern ein angepasster Leitwert. Dieser zeitlich angepasste Leitwert wird anhand einer Zeitdifferenz von Wirkzeitpunkten festlegbarer Ereignisse an der Leitachse und Folgeachse ermittelt. Das bedeutet, dass ein zeitlicher Zusammenhang zwischen einem Wirkzeitpunkt eines Ereignisses an der Leitachse und dem zugehörigen Wirkzeitpunkt des Ereignisses an der Folgeachse hergestellt wird. Die zeitliche Beziehung ist eine Zeitdifferenz, angegeben in einem gemeinsamen Zeitbezugssystem. Es sind beliebige Zeitsysteme vorstellbar, solange beide Zeitsysteme innerhalb des Leitsystems und des Folgesystems übereinstimmen oder in einem genau definierten Zusammenhang stehen. Insbesondere handelt es sich bei einer Gleichlauffunktion für Achsen innerhalb einer Steuerungskomponente um die Systemzeit der Steuerungskomponente. Geeignete festlegbare Ereignisse sind solche Ereignisse, welche an der Leitachse und an der Folgeachse auftreten. Es kann sich beispielsweise um die Ausgabe eines Sollwertes oder das Erreichen eines Istwertes an der Leitachse und an der Folgeachse handeln.

Ein geeigneter Wirkzeitpunkt oder ein geeignetes Ereignis mit zugehörigem Wirkzeitpunkt ist nach Möglichkeit ein Zeitpunkt im Ablauf an der Leit- und Folgeachse, wobei der Ablauf die Ausgabe der Sollwerte und das Erreichen der Istwerte an der jeweiligen Achse umfasst, ab dem sich Leitachse und Folgeachse zeitlich möglichst identisch verhalten. Besonders vorteilhafter Weise wird das Erreichen der jeweiligen Istpositionen als Wirkzeitpunkt verwendet, aber auch die vollständige Ausgabe der Sollwerte kann einen geeigneten Wirkzeitpunkt oder ein geeignetes Ereignis mit zugehörigem Wirkzeitpunkt darstellen, beispielsweise wenn das dynamische Verhalten von Leitachse und Folgeachse, also die Zeit bis zum Erreichen der jeweiligen Istpositionen gleich oder annähernd gleich ist.

Ein Leitwert, welcher aus beispielsweise einer Bewegungsführung hervorgeht und beispielsweise von einem Interpolator vorgegeben wird, wird derart angepasst, dass statt des Basisleitwertes, der vorliegt oder bekannt ist, ein zu einem um die Zeitdifferenz verschobenen Zeitpunkt zugehöriger Leitwert verwendet wird.

Wie oder um wie viel der Basisleitwert zu korrigieren ist, bestimmt sich aus der Zeitdifferenz. Beispielsweise erfolgt die Ermittlung des angepassten Leitwertes direkt aufgrund des bekannten Basisleitwertes und der Zeitdifferenz. Die Zeitdifferenz wird dann beispielsweise direkt dazu verwendet, einen angepassten Leitwert auszulesen, abzuschätzen oder zu berechnen. Die Zeitdifferenz ist somit ausschlaggebend für die Anpassung und damit die Abweichung des angepassten Leitwertes von dem Basisleitwert. Eine Information über die Größe des angepassten Leitwertes ausgehend vom Basisleitwert zu einem um die Zeitdifferenz verschobenen Zeitpunkt wird vorausgesetzt. D.h. dass beispielsweise Daten über den Leitwert zu einem um die Zeitdifferenz verschobenen Zeitpunkt vorliegen oder abgeschätzt oder berechnet werden können. Beispielsweise ist ein Verlauf der Entwicklung des Leitwertes über die Zeit bekannt oder gegeben.

Der angepasste Leitwert kann ferner derart bestimmt werden, dass quasi in einem Zwischenschritt ein Leitwertanpassungswert bestimmt wird. Dies ist ein Wert, der vom Basisleitwert abzuziehen oder zu addieren ist, um den angepassten Leitwert zu erhalten. Auch der Leitwertkorrekturwert wird mittels der Zeitdifferenz bestimmt.

Unter einem Wirkzeitpunkt ist ein Zeitpunkt eines an einer Achse auftretenden Ereignisses zu verstehen. Es werden erfindungsgemäß die Wirkzeitpunkte festlegbarer Ereignisse, die jeweils an der Leitachse und an der Folgeachse auftreten, in einen zeitlichen Zusammenhang gesetzt, so dass eine Zeitdifferenz ermittelt werden kann. Entsprechend handelt es sich bei dem festlegbaren Ereignis an der Leitachse und dem festlegbaren Ereignis an der Folgeachse um ein zueinander gehöriges oder äquivalentes Ereignis. Es handelt sich bei dem auftretenden Ereignis an der Folgeachse insbesondere um das äquivalente Ereignis zu dem auftretenden Ereignis an der Leitachse. Wird beispielsweise an der Leitachse eine Istposition nach Ausgabe eines Leitsollwertes erreicht, so ist das zugehörige Ereignis an der Folgeachse das Erreichen der Istposition des zum Leitsollwert gehörigen Folgesollwertes. Denkbar sind ferner weitere Ereignisse, beispielsweise das um eine zeitliche Konstante verschobene, insbesondere verzögerte, Erreichen einer jeweiligen Istposition. Dabei sollte die zeitliche Konstante in beiden Achsen, in der Folgeachse und in dem der Leitachse, identisch sein.

Es soll erfindungsgemäß auf an der Leitachse und an der Folgeachse auftretende Ereignisse abgestellt werden, deren jeweilige Wirkzeitpunkte miteinander verglichen werden und deren Zeitdifferenz zueinander in einem gemeinsamen Zeitbezugsystem angegeben werden. Diese Zeitdifferenz wird verwendet, um bereits den Leitwert quasi vor der eigentlichen Umsetzung in der Gleichlauffunktion derart angepasst zu generieren und an der Folgeachse bereitzustellen, dass er um die Zeitdifferenz angepasst ausgegeben wird. Bezieht sich der Basisleitwert auf den passenden Leitwert zu einem Zeitpunkt X, so bezieht sich der angepasste Leitwert auf einen Zeitpunkt X + oder x - die Zeitdifferenz. Somit kann die Gleichlauffunktion insbesondere laufend oder in jedem Interpolationstakt der Folgeachse von vornherein auf das für den Gleichlauf entscheidende Ergebnis an den jeweiligen Achsen abstellen.

Durch den Bezug des Gleichlaufs auf den Zeitpunkt des Erreichens von bestimmten Ereignissen, wie insbesondere dem Erreichen einer Istposition an der Folgeachse oder die Ausgabe der Sollwerte, und durch die entsprechende zeitliche Anpassung des Leitwertes lassen sich Auswirkungen von Kommunikationszeiten oder unterschiedlichen Berechnungstakten oder Interpolationstakten innerhalb von Systemen automatisch oder implizit berücksichtigen und deren Einfluss muss insbesondere nicht aufwändig für zu der Interpolationstaktgrenze zugehörige Sollwerte abgeschätzt werden.

Somit kann die Gleichlauffunktion von vornherein auf das für den Gleichlauf entscheidende Ergebnis oder den gewünschten Endzustand, konkret ein zeitgleiches Einnehmen einer Istposition oder ein zeitgleiches Verhalten von Istwerten, an den jeweiligen Achsen abstellen.

Durch den Bezug des Gleichlaufs auf den Zeitpunkt des Erreichens von bestimmten Ereignissen, wie insbesondere dem Erreichen einer Ist-Position an der Folgeachse, und durch die entsprechende zeitliche Anpassung des Leitwertes lassen sich Auswirkungen von unterschiedlichen Kommunikationszeiten innerhalb von Systemen oder zwischen verschiedenen Systemen verschiedener Achsen oder von unterschiedlichen Interpolationstakten je Achse oder von zeitversetzten Interpolationstakten von Leitachse und Folgeachse berücksichtigen. Durch das vorgeschlagene Verfahren werden sie implizit bei der Anpassung des Leitwertes für die Gleichlauffunktion durch die Folgeachse berücksichtigt.

Somit ergibt sich eine erhöhte Genauigkeit für die Gleichlauffunktion und ferner eine höhere Flexibilität beim Einsatz von Folgeachsen mit einem zeitlichen Verhalten, das sowohl von der Leitachse als auch von dem anderer Folgeachsen der gleichen Leitachse abweichen kann.

Die Zeiten bis zum Eintreten des Ereignisses sind an der jeweiligen Achse verfügbar oder können einfach ermittelt werden. Beispielsweise werden Ausgabezeiten von Sollwerten oder effektive Ausgabezeiten bis zum Erreichen der Ist-Position jeweils ermittelt. Damit ist keine Einzelanalyse von Zeiten wie Sollwertausgabeverzögerung, Interpolationstaktgrenzen, Kommunikations- und Kommunikationsaufbereitungszeiten, Interpolatortaktzeiten, sonstige Aufbereitungszeiten oder effektive Ausgabezeiten erforderlich. Anstatt als Wirkzeitpunkt den Zeitpunkt heranzuziehen, zu dem der Folgesollwert vorgegeben werden soll, insbesondere die auf die Berechnung folgende nächste Interpolationstaktgrenze, wird auf einen Wirkzeitpunkt abgestellt, bei welchem bereits die genannten achsindividuellen zeitlichen Verzögerungen berücksichtigt wurden bzw. integriert wurden.

Zur Berechnung des angepassten Leitwertes genügt der Folgeachse als Information von der Leitachse insbesondere der Basis-Leitwert mit genauem und im Zeitsystem der Folgeachse interpretierbaren Zeitbezug und die Zeit bis zum Wirkzeitpunkt des Ereignisses an der Leitachse. Alternativ genügt insbesondere der Zeitpunkt - wiederum in einer für die Folgeachse interpretierbaren Zeitsystem - des Wirkzeitpunktes des Ereignisses an der Leitachse. Beispielsweise sind für alle beteiligten Achsen, beispielsweise die Leitachse und die Folgeachse, überdies die effektiven Ausgabezeiten bekannt. Diese können beliebige Komponenten wie Sollwertverzögerung, Kommunikationszeit oder Achsverhalten der Achsen berücksichtigen. Die zu ermittelnden und zu berücksichtigenden Ausgabezeiten beziehen sich auf Ausgabezeiten, welche bis zum Erreichen des festlegbaren Ereignisses verstreichen. In Falle des Erreichens der zu den Sollwerten gehörigen Istwerte handelt es sich beispielsweise jeweils um die effektiven Ausgabezeiten bis zum Erreichen der Istposition an der jeweiligen Achse, d. h. der Leitachse bzw. der Folgeachse.

Somit werden an der Folgeachse jeweils die Wirkzeitpunkte berechnet oder diese sind bekannt, insbesondere der Wirkzeitpunkt für den Folgeistwert und der Wirkzeitpunkt für den Leitistwert. Die Wirkzeitpunkte werden im gleichen Zeitsystem miteinander in Beziehung gesetzt und es ist so eine relative zeitliche Differenz zwischen den Wirkzeitpunkten ermittelbar.

Somit wird der Zeitpunkt mit dem Sollwert der Leitachse ermittelt, der zur Istposition der Leitachse zum Zeitpunkt der Istposition der Folgeachse gehört. Auf diesen so ermittelten Zeitpunkt wird nun abgestellt, um den Leitwert der Leitachse an der Folgeachse als angepassten Leitwert zu bestimmen. Der zu diesem Zeitpunkt zugehörige Leitwert wird also als angepasster Leitwert berechnet. Mit dem angepassten Leitwert wird sodann die Gleichlauffunktion durchgeführt, um gemäß dem Gleichlaufgesetz den Folgesollwert für die nächste Interpolationstaktgrenze der Folgeachse zu bestimmen und auszugeben.

Gemäß einer Ausgestaltung nehmen die Wirkzeitpunkte auf eine der Leitachse und Folgeachse gemeinsame Systemzeit Bezug. Beispielsweise wird eine globale Systemzeit verwendet, welche in allen beteiligten Systemen der beteiligten Achsen bekannt ist und ermittelt werden kann. Für Anwendungsfälle, in welchen in den verschiedenen Systemen unterschiedliche Systemzeiten vorliegen, ist ein Unterschied zwischen den Systemzeiten bekannt oder festzustellen. Beispielsweise ist im Falle eines verteilten Gleichlaufes über mehrere Bussegmente hinweg ein solcher bekannter Unterschied zwischen den Systemzeiten gegeben, welcher berücksichtigt werden muss. Durch eine solche Berücksichtigung und Anpassung nehmen letztlich die Wirkzeitpunkte Bezug auf eine gemeinsame Systemzeit.

Gemäß einer Ausgestaltung besteht die gemeinsame Systemzeit der Zeitsysteme der Leitachse und der Folgeachse aufgrund einer gemeinsamen Uhrzeit. Insbesondere im Falle, dass die Leitachse und die Folgeachse auf einem gemeinsamen Steuerungssystem vorgesehen sind, ist es möglich, dass eine Uhrzeit auf diesem System zugrunde gelegt wird. Angaben zu Ereignissen werden über den Wirkzeitpunkt an diese Uhrzeit und damit an die Systemzeit gebunden oder es wird als Bezugssystem der Wirkzeitpunkte die gemeinsame Uhrzeit zugrunde gelegt.

Insbesondere sobald die Leitachse und die Folgeachse auf verschiedenen Steuerungssystemen ausgeführt werden, d. h. die Ansteuerung und Sollwertberechnung für die jeweilige Achse auf verschiedenen Steuerungskomponenten durchgeführt wird, ist ggf. eine Systemzeit nicht von vornherein gegeben. In diesen Fällen erfolgt eine Beziehung von jeweils bestehenden Systemzeiten zueinander. Dies geschieht beispielsweise für Anwendungen, in denen Leit- und Folgeachse auf verschiedenen Profinet-Segmenten ausgebildet sind, und ein ermittelbarer Offset zwischen den Segmenten berücksichtigt wird.

Gemäß einer Ausgestaltung wird dem Basis-Leitwert und/ oder dem Folgesollwert jeweils ein Zeitstempel zugeordnet und der Zeitstempel bezieht sich auf die gemeinsame Systemzeit (t). Über den Zeitstempel ist der Zeitbezug zu einem der beiden Systemzeiten, entweder der der Leitachse oder der der Folgeachse, gegeben. Im Falle übereinstimmender Zeitsysteme oder einer gemeinsamen Uhrzeit ist es aufgrund des Zeitstempels direkt möglich, in beiden Systemen einen Wirkzeitpunkt eines Ereignisses direkt in Bezug zu einem Zeitstempel zu setzen. Für Fälle, in welchen der Zeitstempel eine Zeitangabe in Bezug auf ein Zeitsystem eines der Systeme gibt, ist eine Angabe eines Wirkzeitpunktes im anderen System anzupassen oder umzurechnen.

Beispielsweise ist in einem einheitlichen System zwischen Leitachse und Folgeachse der Zeitstempel implizit vorhanden und bezieht sich standardmäßig auf die nächste Interpolationstaktgrenze der Leitachse.

Vorteilhafterweise sind der Folgeachse der Basisleitwert mit dem dazugehörigen Zeitstempel sowie die Zeiten an der Leitachse bis zum Erreichen des festgelegten Ereignisses bekannt, oder es ist direkt der zum festgelegten Ereignis gehörige Wirkzeitpunkt des Basisleitwertes im dazugehörigen Zeitstempel enthalten und daraus bekannt. Unter Berücksichtigung einer möglicherweise vorliegenden zeitlichen Verschiebung des Zeitsystems der Folgeachse relativ zum Zeitsystem der Leitachse, können nun durch die Folgeachse die Wirkzeitpunkte von äquivalenten Ereignissen an Folge- und Leitachse miteinander verglichen werden. Im einheitlichen bzw. durch Anpassung vereinheitlichten gemeinsamen Zeitsystem wird so an der Folgeachse die Zeitdifferenz ermittelt.

Gemäß einer Ausgestaltung werden als festlegbare Ereignisse eine Ausgabe des Leitwertes an der Leitachse und eine Ausgabe des Folgesollwertes an der Folgeachse festgelegt. Somit wird für das Anpassen des Leitwertes auf die Zeitpunkte abgestellt, zu denen an Leit- und Folgeachse jeweils die Sollwertausgabe erfolgt und die Zeitdifferenz dieser Zeitpunkte verwendet, um den Leitwert anzupassen. Die Ausgabezeit der Sollwerte ist dabei die Zeit, bis die Sollwerte vollständig über den unterlagerten Antrieb an den Motor ausgegeben sind. Beispielsweise werden dadurch an den Achsen potentiell unterschiedliche Sollwertverzögerungen oder Filter im Sollwertzweig, potentiell unterschiedliche Zeiten für die Bereitstellung der Werte im Servo, potentiell unterschiedliche Zeiten im Antrieb bis zum Ausgabebeginn oder potentiell unterschiedliche Ausgabezeiten der Werte über eine Interpolationstaktlänge berücksichtigt beim Ermitteln eines optimierten angepassten Leitwertes für eine Gleichlauffunktion.

Es ergibt sich ein verbessertes Gleichlaufverfahren, in welchem durch das Berechnen der Wirkzeitpunkte der Sollwert-Ausgabezeitpunkte an den jeweiligen Achsen eine höhere Genauigkeit erreicht wird. System- oder ablaufbedingte Zeitunterschiede, insbesondere bei verteilten Gleichlaufanwendungen oder unterschiedlich langen Interpolationstakten von Leitachse und Folgeachse werden implizit oder automatisch aufgrund des vorgeschlagenen Verfahrens zur Anpassung des Leitwertes aufgehoben.

Gemäß einer Ausgestaltung werden als festlegbare Ereignisse ein Erreichen eines Leitistwertes an der Leitachse und eines Folgeistwertes an der Folgeachse festgelegt.

Somit wird für das Durchführen der Gleichlauffunktion auf die Istwerte bzw. das Erreichen der Istwerte auf den beteiligten Achsen abgestellt. Der Gleichlauf wird somit quasi auf die hochgerechneten Istpositionen der Achsen bezogen. Das bedeutet, dass der Leitwert für den nachfolgenden Interpolationstakt von der Folgeachse auf Basis der Wirkzeitpunkte der Istpositionen an der Leit- und Folgeachse und des Zeitversatzes dieser Wirkzeitpunkte angepasst wird. Ein so angepasster Leitwert berücksichtigt bereits Effekte, welche beispielsweise aufgrund unterschiedlicher effektiver Ausgabezeiten in den Systemen der Folge- und Leitachse oder aufgrund versetzter Interpolationstaktgrenzen zu einem nicht optimierten Leitwert in einer Gleichlaufanwendung führen würden. Beispielsweise werden so zusätzlich zu den oben genannten Zeiten, die im Falle des Abgleichs der Wirkzeitpunkte der jeweiligen Sollwertausgabe berücksichtigt werden, noch potentiell unterschiedliche Verzögerungen aufgrund unterschiedlichen Achsverhaltens oder Prozessverhaltens der Achsen mit berücksichtigt bei der Anpassung des im Gleichlauf zu verwendenden Leitwertes.

Insbesondere wird der Zeitpunkt des Erreichens der Istposition der Folgeachse zum in diesem Interpolationstakt zu berechnenden Sollwert über den Zeitpunkt an der folgenden Interpolationstaktgrenze der Folgeachse plus der Zeit für das Erreichen der Istposition, der sog. effektiven Ausgabezeit, ab diesem Zeitpunkt bestimmt.

Es ergibt sich ein verbessertes Gleichlaufverfahren, in welchem durch das Berechnen der Wirkzeitpunkte des Erreichens der jeweiligen Istposition an den jeweiligen Achsen eine höhere Genauigkeit erreicht wird. System- oder ablaufbedingte Zeitunterschiede, insbesondere bei verteilten Gleichlaufanwendungen oder unterschiedlich langen Interpolationstakten von Leitachse und Folgeachse werden implizit oder automatisch aufgrund des vorgeschlagenen Verfahrens zur Anpassung des Leitwertes aufgehoben. Gemäß der beschriebenen Ausgestaltung können selbst Zeitunterschiede nach Ausgabe der jeweiligen Sollwerte an Leit- und Folgeachse bis zum Erreichen der jeweiligen Istposition berücksichtigt werden und die Flexibilität und Genauigkeit in Gleichlaufanwendungen nochmals erhöht werden.

Gemäß einer Ausgestaltung wird der angepasste Leitwert an der Folgeachse und/ oder an einem Stellvertreter der Leitachse in einem System der Folgeachse bestimmt. Die Anpassung des Leitwertes erfolgt beispielsweise in einem Stellvertreter der Leitachse im System der Folgeachse, wobei der Stellvertreter im Interpolationstakt der Folgeachse vor der Gleichlauffunktion der Folgeachse gerechnet wird. Ein System der Folgeachse ist insbesondere ein einheitliches System. Um die Systemstruktur eines einheitlichen Systems für die Folgeachse beizubehalten wird der Leitwert beispielsweise in einem Stellvertreter der Leitachse auf dem System der Folgeachse realisiert, wobei dem Stellvertreter der Leitwert mit zugehörigem Zeitstempel wie auch die Kennwerte der Folgeachse, wie z.B. Interpolationstakt und Ausgabezeiten bekannt sind. Auch Mischformen mit Teil-Berechnungen auf der Folgeachse und Teil-Berechnungen auf dem Stellvertreter sind denkbar.

Gemäß einer Ausgestaltung wird an der Folgeachse oder einem Stellvertreter die Ausgabe des Leitwertes an der Leitachse anhand eines Ausgangszeitpunktes und einer Ausgabezeit der Leitachse oder anhand eines Wirkzeitpunktes des Ereignisses der Ausgabe des Leitwertes bestimmt. Das Bestimmen erfolgt insbesondere an der Folgeachse, welche die Anpassung des Basis-Leitwertes vornimmt, oder einem Stellvertreter der Leitachse im System der Folgeachse. Somit wird der Wirkzeitpunkt der Ausgabe des Leitwertes an der Folgeachse bestimmt.

Gemäß einer Ausgestaltung werden der Ausgangszeitpunkt und die Ausgabezeit des Leitwertes oder der Wirkzeitpunkt des Ereignisses der Ausgabe des Leitwertes an der Folgeachse oder einem Stellvertreter bereitgestellt. Die Folgeachse, die die Anpassung des Basis-Leitwertes vornimmt, erhält die Informationen beispielsweise in einer Datenkommunikation, insbesondere über ein Telegramm, von der Leitachse. Als Stellvertreter wird ein Stellvertreter der Leitachse in einem System der Folgeachse wie oben beschrieben verstanden.

Gemäß einer Ausgestaltung sind der Ausgangszeitpunkt und die Ausgabezeit des Leitwertes oder der Wirkzeitpunkt des Ereignisses der Ausgabe des Leitwertes in einem Zeitstempel des Basisleitwertes enthalten oder werden als Angaben in einem Zeitstempel gemeinsam mit dem Basisleitwert übertragen. Dabei wird der Ausgangszeitpunkt beispielsweise in der gemeinsamen Systemzeit oder mit Bezug zur gemeinsamen Systemzeit angegeben oder mit Bezug zu einer Interpolationstaktgrenze der Leitachse oder der Folgeachse. Die der Folgeachse bereitgestellten Angaben zur Systemzeit sind insbesondere hinsichtlich der Semantik des Wertes für die Folgeachse eindeutig.

Bei einem verteilten Gleichlauf, in welchem Folgeachse und Leitachse auf unterschiedlichen Systemen beispielsweise mit jeweils separaten Steuerungskomponenten ausgeführt sind, können in einer Variante Ausgabezeiten, insbesondere die Zeit bis zur Ausgabe der Sollwerte oder die effektive Ausgabezeit bis zum Erreichen der Istpositionen, direkt von einem Anwender in der Folgeachse oder dem System der Folgeachse vorgegeben und auf diese Weise bereitgestellt werden. Alternativ erfolgt eine Mitübertragung mit Leitwerten im Gleichlauftelegramm oder eine separate Übertragung in Telegrammen. In einer weiteren Variante ist es möglich, den Zeitstempel des Leitsollwertes derart zu modifizieren, dass er bereits die Ausgabezeit der Sollwerte an der der Leitachse berücksichtigt.

Gemäß einer Ausgestaltung wird an der Folgeachse oder einem Stellvertreter das Erreichen des Leitistwertes an der Leitachse anhand eines Ausgangszeitpunktes und einer effektiven Ausgabezeit der Leitachse oder anhand eines Wirkzeitpunktes des Ereignisses des Erreichens der Istposition an der Leitachse bestimmt. Das Bestimmen erfolgt insbesondere an der Folgeachse, welche die Anpassung des Basis-Leitwertes vornimmt.

Gemäß einer Ausgestaltung werden der Ausgangszeitpunkt und die effektive Ausgabezeit der Leitachse oder der Wirkzeitpunkt des Ereignisses des Erreichens der Istposition an der Leitachse an der Folgeachse oder einem Stellvertreter bereitgestellt. Die Folgeachse, die die Anpassung des Basis-Leitwertes vornimmt, erhält die Informationen beispielsweise über ein Telegramm von der Leitachse. Insbesondere für variable oder schwankende effektive Ausgabezeiten der Leitachse wird die effektive Ausgabezeit der Leitachse für jede Leitwertanpassung mit übertragen, beispielsweise in einem Telegramm. Als Stellvertreter wird ein Stellvertreter der Leitachse in einem System der Folgeachse wie oben beschrieben verstanden.

Gemäß einer Ausgestaltung sind der Ausgangszeitpunkt und die effektive Ausgabezeit der Leitachse oder der Wirkzeitpunkt des Ereignisses des Erreichens der Istposition an der Leitachse in einem Zeitstempel des Basisleitwertes enthalten oder werden als Angaben in einem Zeitstempel gemeinsam mit dem Basisleitwert übertragen.

Gemäß einer Ausgestaltung wird die Ausgabe des Folgesollwertes an der Folgeachse anhand eines zum Berechnungszeitpunkt zugehörigen Ausgangszeitpunktes, insbesondere einer nächsten Interpolationstaktgrenze, und einer Ausgabezeit zur Ausgabe des Folgesollwertes ermittelt. Somit wird der Wirkzeitpunkt der Ausgabe des Folgesollwertes ermittelt, welcher dann mit dem analogen Wirkzeitpunkt an der Leitachse verglichen wird.

Die Ausgabe des Folgesollwertes wird an der Folgeachse ermittelt oder an einem Stellvertreter der Leitachse im System der Folgeachse. Als Stellvertreter wird ein Stellvertreter der Leitachse in einem System der Folgeachse wie oben beschrieben verstanden. Der Stellvertreter wird beispielsweise im Interpolationstakt der Folgeachse vor der Gleichlauffunktion der Folgeachse gerechnet. Dem Stellvertreter ist dazu die Ausgabezeit der Sollwerte der Folgeachse bekannt.

Gemäß einer Ausgestaltung wird das Erreichen des Folgeistwertes an der Folgeachse anhand eines zum Berechnungszeitpunkt zugehörigen Ausgangszeitpunktes, insbesondere einer nächsten Interpolationstaktgrenze, und einer effektiven Ausgabezeit der Folgeachse bestimmt.

Das Erreichen des Folgeistwertes wird an der Folgeachse ermittelt oder an einem Stellvertreter der Leitachse im System der Folgeachse. Der Stellvertreter wird beispielsweise im Interpolationstakt der Folgeachse vor der Gleichlauffunktion der Folgeachse gerechnet. Dem Stellvertreter ist dazu die effektiven Ausgabezeit der Folgeachse bis Erreichen der Istwerte bekannt.

Insbesondere für unterschiedliche Ausgabezeiten der Leitachse und der Folgeachse werden beide Ausgabezeiten jeweils für das Erreichen des Leitistwertes und des Folgeistwertes berücksichtigt. In Anwendungen oder Systemen, in welchen die zeitliche Länge der Ausgabezeit der Leitachse mit der zeitlichen Länge der Ausgabezeit der Folgeachse übereinstimmt, kann die Berücksichtigung der Ausgabezeiten jeweils entfallen. Für die Ermittlung der Zeitdifferenz spielen dann gleiche zeitliche Einflussfaktoren auf beiden Achsen keine Rolle. In einer Variante ist für das Bestimmen des angepassten Leitwertes in einem Programmablauf auf der Folgeachse die Berücksichtigung der jeweiligen Ausgabezeiten optional aktivierbar und/ oder deaktivierbar.

Sobald die Interpolationstakte oder Berechnungstakte der Leit- und Folgeachse unterschiedlich sind, sind auch die Ausgabezeiten unterschiedlich, da die Sollwerte an der Interpolatortaktgrenze über den folgenden Takt ausgegeben werden und dann auch erst erreicht werden können. Für diese Anwendungen ist dann die Berücksichtigung der jeweiligen Ausgabezeiten zu aktivieren.

Gemäß einer Ausgestaltung weisen der Basisleitwert sowie der angepasste Leitwert eine Leitwertposition oder eine Leitwertposition und eine Leitwertgeschwindigkeit auf.

Die Werte Leitwertposition und Leitwertgeschwindigkeit und ggf. Leitwertbeschleunigung werden typischerweise zur Festlegung des Leitwertes mittels eines Telegramms übertragen.

Gemäß einer Ausgestaltung wird der zu einem Ausgangszeitpunkt der Leitachse zugehörige Basisleitwert korrigiert, indem der angepasste Leitwert zu einem ausgehend von dem Ausgangszeitpunkt der Leitachse um die Zeitdifferenz verschobenen Zeitpunkt bestimmt wird. Der Begriff "verschobener Zeitpunkt" kann dabei eine Verschiebung in beide Richtungen, zeitlich vor oder zeitlich zurück, ausgehend von dem Ausgangszeitpunkt bedeuten. Der Ausgangszeitpunkt ist dabei in der Regel die Interpolationstaktgrenze, zu der die Leitachse den Leitsollwert berechnet. Gemäß einer Ausgestaltung wird der angepasste Leitwert für den ausgehend von dem Ausgangszeitpunkt der Leitachse um die Zeitdifferenz verschobenen Zeitpunkt ausgehend von dem Basisleitwert extrapoliert oder interpoliert. D.h. der für die Gleichlaufberechnung zugrunde zu legende angepasste Leitwert wird derart bestimmt, dass er aufgrund vorhandener Leitwerte mit zugeordneten Zeitpunkten und anhand eines sich aus den bekannten Leitwerten ergebenden Leitwertverlaufes ermittelt wird. Es kommen dabei gängige Interpolations- oder Extrapolationsverfahren zum Einsatz.

Es erfolgt eine Extrapolation in Fällen, in welchen ein zu einem späteren Zeitpunkt zugehöriger Leitwert ausgegeben werden sollte, um eine bessere, d.h. möglichst gleichzeitige, Übereinstimmung beim Erreichen der jeweiligen Ereignisse an den jeweiligen Achsen zu erreichen. Die Extrapolation erfolgt im einfachsten Ansatz über die Geschwindigkeit multipliziert mit der Differenzzeit. So erhält man beispielsweise den angepassten Positionssollwert. In Fällen, in welchen der Leitwert aufgrund der Berechnung derart angepasst werden sollte, dass der angepasste Leitwert zu einem Zeitpunkt um die Zeitdifferenz ausgehend vom Ausgangszeitpunkt nach vorne verschoben ermittelt werden sollte, erfolgt eine Interpolation.

Insbesondere erfolgt die Extrapolation oder Interpolation unter Berücksichtigung der Leitwertgeschwindigkeit und optional zusätzlich unter Berücksichtigung der Leitwertbeschleunigung. Optional erfolgt zusätzlich eine additiv zu berücksichtigende Extrapolationszeit oder Interpolationszeit, welche aufgrund der zeitlichen Verzögerung durch die Berechnung des angepassten Leitwertes an der Folgeachse zu berücksichtigen ist.

Gemäß einer Ausgestaltung wird der angepasste Leitwert als ein zu einer nächsten Interpolationstaktgrenze eines Interpolationstaktes der Folgeachse anzuwendender Leitwert ermittelt. Die Folgeachse berechnet den angepassten Leitwert derart, dass er zur nächsten Interpolationstaktgrenze der Folgeachse optimiert in der Gleichlauffunktion angewendet wird oder in die Gleichlauffunktion eingeht. Dabei ist insbesondere der Ausgangszeitpunkt der Leitachse, also beispielsweise die Interpolationstaktgrenze der Leitachse, für welche die Leitachse den Leitwert ausgegeben hat, für die Folgeachse unerheblich und insbesondere auch nicht bekannt.

Gemäß einer Ausgestaltung werden die jeweiligen Antriebe der Folgeachse und der Leitachse oder der Folgeachse und einer weiteren Folgeachse der Leitachse im Gleichlauf zueinander betrieben. Auf vorteilhafte Weise kann ein angepasster Leitwert für jede Folgeachse von mehreren Folgeachsen, die einer Leitachse zugeordnet sind, mit dem oben beschriebenen Verfahren ermittelt werden. Für jede Folgeachse können individuelle Ausgabezeiten oder effektive Ausgabezeiten oder Interpolationstaktunterschiede oder Zeitversätze des Zeitsystems relativ zur Leitachse individuell berücksichtigt werden.

Die Erfindung betrifft ferner eine Steuerungskomponente zur Steuerung eines Antriebs einer Folgeachse basierend auf Leitwerten einer Leitachse, ausgebildet zur Durchführung eines Verfahrens nach einem der vorstehenden Ansprüche. Auf vorteilhafte Weise wird das Gleichlaufverfahren oder die Gleichlauffunktion auf einer Steuerungskomponente zur Steuerung der Folgeachse berechnet.

Gemäß einer Ausgestaltung ist eine Steuerungskomponente zur Steuerung eines Antriebs der Leitachse separat ausgebildet und die Steuerungskomponenten kommunizieren über eine Busverbindung miteinander.

Daraus ergeben sich vorteilhafte Anwendungen für einen verteilten Gleichlauf, bei welchem die Gleichlaufachsen auf mehrere Komponenten verteilt sind. Über die Busverbindung können effektive Ausgabezeiten bei einem verteilten Gleichlauf übertragen werden oder diese sind bereits im übertragenen Zeitstempel berücksichtigt. Sind mehrere Steuerungskomponenten für eine echtzeitfähige Kommunikation am selben Bussegment, beispielsweise eine Profinet-IRT am selben Bussegment verbunden, so stellt bereits die Profinet-IRT-Struktur eine gemeinsame Systemzeit zur Verfügung. Bei einem verteilten Gleichlauf hat für solche Anwendungen der im Telegramm übertragene Zeitstempel vorteilhafterweise die gemeinsame Systemzeit zur Basis. Bei Anwendungen eines verteilten Gleichlaufes über mehrere Bussegmente hinweg ist der Unterschied zwischen den Systemzeiten der Segmente zu berücksichtigen.

Gemäß einer Ausgestaltung ist die Steuerungskomponente zugleich ausgebildet zur Steuerung eines Antriebs der Leitachse. Beispielsweise ergeben sich für einen Gleichlauf mit identischer Steuerungskomponente für Leitachse und Folgeachse aufgrund vorgesehener unterschiedlicher oder nicht-synchronisierter Interpolationstakte weiterhin die Vorteile, dass aufgrund des gemeinsamen Zeitbezuges beispielsweise auf das gleichzeitige Erreichen von Istpositionen an Leit- und Folgeachse hin optimiert werden kann. Auch ist die optimierte Leitwertberechnung nicht von bidirektionaler Kommunikation zwischen der Leitachse und der Folgeachse abhängig, sondern die Folgeachse kann die Optimierung anhand von Daten über die Leitachse aus einer unidirektionalen Kommunikation der Leitachse selbst vornehmen.

Auf vorteilhafte Weise ermöglichen das vorgeschlagene Verfahren sowie die zugehörige Steuerungseinheit eine Anpassung eines an der Folgeachse einzusetzenden Leitwertes für eine Gleichlauffunktion derart, dass insbesondere bei Erreichen der Istposition der Leitachse die Istposition der Folgeachse entsprechend dem Gleichlaufgesetz bestmöglich ebenfalls möglichst zeitgleich angefahren ist. Da beispielsweise erst mit dem Erreichen der Istposition an der jeweiligen Achse die an der jeweiligen Achse auftretenden Effekte, die zu einer individuellen Verzögerung des Erreichen des Istwertes führen, aufgetreten sind, sind sie auch zugleich bereits im Gleichlaufalgorithmus berücksichtigt, wenn das zeitliche Zusammenfallen der Wirkzeitpunkte des Erreichens der Istposition an der Folgeachse und Leitachse als Bedingung vorgegeben wird, um den geeigneten Leitwert für einen Interpolationstakt der Folgeachse zu berechnen und vorzugeben.

Es wird somit das zeitliche Zusammenfallen des Ereignisses Erreichen der Istposition an der Leitachse und Erreichen der Istposition an der Folgeachse in einer gemeinsamen Systemzeit als Bedingung angesetzt, um quasi rückwärts zu berechnen, wie der an der Leitachse bereitgestellte Leitwert an der Folgeachse vor Ausführen der Gleichlauffunktion zeitlich anzupassen ist, damit die Bedingung möglichst gut erfüllt ist. Quasi in einer Vorwärtsberechnung wird jeweils der Wirkzeitpunkt des Ereignisses, welches für die Optimierung gewählt wird, in einer gemeinsamen Systemzeit berechnet, um die Zeitdifferenz zwischen dem Eintreten der jeweiligen Ereignisse zu ermitteln. Quasi in der Rückwärtsrichtung wird dann diese Zeitdifferenz angewendet, um den vorliegenden Basisleitwert derart anzupassen, dass er zu dem um die Zeitdifferenz verschobenen Zeitpunkt zugehörig ist. Ergibt sich, dass das Ereignis an der Folgeachse zu einem späteren Zeitpunkt als das Ereignis an der Leitachse eintritt, so ist der Leitwert zu extrapolieren, ergibt sich hingegen, dass der Wirkzeitpunkt des Ereignisses an der Leitachse zeitlich nachfolgend zum Wirkzeitpunkt des Ereignisses an der Folgeachse eintritt, so ist der angepasste Leitwert über eine Interpolation anzupassen.

Interpolationstakte der Leitachse und der Folgeachse müssen somit vorteilhafterweise nicht aufeinander synchronisiert sein und bei mehreren Folgeachsen kann eine unterschiedliche Über- oder Untersetzung der Folgeachsen-Interpolationstakte zum Leitachsen-Interpolationstakt bestehen.

Der Basisleitwert kann auch als ein Formalleitwert mit Zeitbezug bezeichnet werden.

Das Verfahren ist auf vorteilhafte Weise für den verteilten Gleichlauf anwendbar, bei welchem der Austausch über Leit- und Istwerte über bidirektionale Telegramme geschieht. Besonders vorteilhafterweise kann das Verfahren auch eingesetzt werden, wenn lediglich unidirektionale Telegramme oder Broadcasttelegramme verschickt werden. Beispielsweise sind an der Folgeachse aufgrund des vorgegebenen Leitwertes mit dazugehörigem Zeitstempel und ggf. mit weiteren Daten wie Ausgabezeiten wie oben beschrieben, alle Informationen vorhanden, um den angepassten Leitwert zu berechnen. Insbesondere bei vielen Folgeachsen ermöglicht das ein vereinfachtes Gleichlaufverfahren. Da Effekte, die zur Verzögerung oder zum Auseinanderfallen der einheitlich festgelegten Wirkzeitpunkte der Ereignisse an Leit- und Folgeachse führen, bereits im Gleichlaufalgorithmus berücksichtigt sind, ist auch ein Telegrammausfall unschädlich.

Das Verfahren ist für Anwendungsfälle realer Leitachsen ebenso einsetzbar wie bei virtuellen Leitachsen.

Die Erfindung wird nachfolgend anhand von Ausführungsbeispielen mit Hilfe der Figuren näher erläutert. Es zeigen:
- Figur 1: eine schematische Darstellung zur Veranschaulichung zeitlicher relativer Bezüge von für die Berechnung eines angepassten Leitwertes gemäß einem ersten Ausführungsbeispiel der Erfindung ermittelten Größen;
- Figur 2: eine schematische Darstellung zur Veranschaulichung zeitlicher relativer Bezüge von für die Berechnung eines angepassten Leitwertes gemäß einem zweiten Ausführungsbeispiel der Erfindung ermittelten Größen;
- Figur 3: eine schematische Darstellung zur Veranschaulichung zeitlicher relativer Bezüge von für die Berechnung eines angepassten Leitwertes gemäß einem dritten Ausführungsbeispiel der Erfindung ermittelten Größen;
- Figur 4: eine schematische Darstellung eines Verfahrensablaufes zur Anpassung des Leitwertes gemäß einem vierten Ausführungsbeispiel der Erfindung.

In den Figuren sind funktionsgleiche Elemente mit denselben Bezugszeichen versehen, sofern nichts anderes angegeben ist.

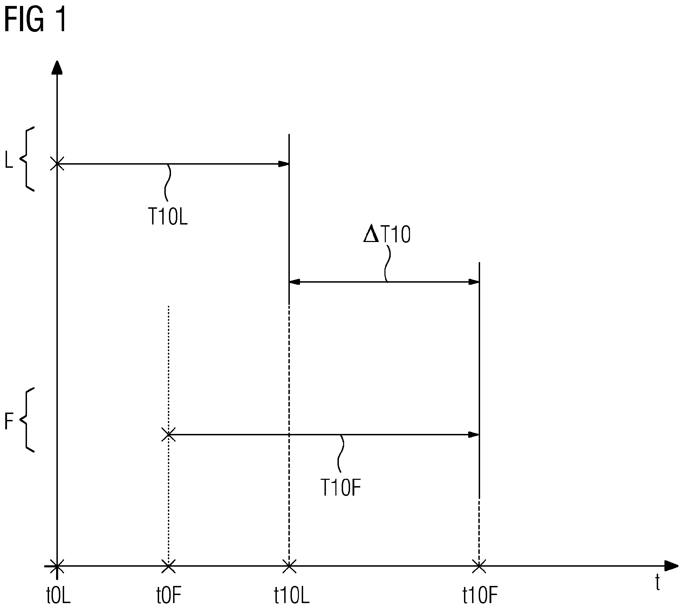

In Figur 1 sind Ereignisse und Zeitpunkte dieser Ereignisse, welche zur Bestimmung eines angepassten Leitwertes gemäß einem ersten Ausführungsbeispiel der Erfindung genutzt werden, in einem Zeitdiagramm dargestellt. Die horizontale Achse zeigt dabei eine Systemzeit t an, welche eine gemeinsame Systemzeit zwischen einer Leitachse L und einer Folgeachse F ist. D.h. dass die Leitachse L und einer Folgeachse F eine gemeinsame Systemzeit t verwenden. Beispielsweise ist eine erste Steuerungskomponente zur Steuerung der Leitachse L vorgesehen und eine zweite Steuerungskomponente zur Steuerung der Folgeachse F. Die in zeitlichem Zusammenhang stehenden Ereignisse sind in der oberen Hälfte des Diagramms für die Leitachse eingetragen und in der unteren Hälfte für die Folgeachse. Über eine Profinet-IRT-Kommunikation innerhalb eines Bussegmentes ist eine gemeinsame Systemzeit t verfügbar, auf welche sich Berechnungen in der Leitachse L und in der Folgeachse F und die Angabe von Sollwerten in beiden Systemen beziehen.

Zu einem Ausgangszeitpunkt t0L wird von der Leitachse L ein Leitwert als Leitsollwert ausgegeben, welcher dazu führt, dass mittels der Steuerungskomponente ein Leitistwert angenommen wird. Bei t0L liegt somit die Interpolatortaktgrenze der Leitachse, für die der Sollwert an der Leitachse berechnet wird. Dieser wird über eine Ausgabezeit T10L ausgegeben und führt nach einer Prozesszeit zur Istposition an der Leitachse.

Zu einem Zeitpunkt t10L ist somit der Sollwert ausgegeben. Dieser Zeitpunkt ist der Wirkzeitpunkt t10L der Ausgabe des Sollwertes an der Leitachse.

Die Folgeachse F berechnet den Folgesollwert zu einem nachfolgenden Interpolationstakt der Folgeachse F. Für eine Interpolationstaktgrenze t0F dieses Interpolationstaktes gibt die Folgeachse F mittels einer Gleichlauffunktion einen Folgesollwert zu dem von der Leitachse ausgegebenen Basis-Leitwert vor.

Die Interpolatortaktgrenze t0F, zu der die Folgeachse F die Sollwerte berechnet, ist um eine undefinierte Zeit, die sich aus der Kommunikationszeit und/oder unterschiedlichen Interpolatortaktzeiten ergibt, verschoben.

An der Folgeachse F erfolgt dann die Berechnung des Wirkzeitpunktes t10F der Ausgabe des Folgesollwertes.

Ausgehend von der Interpolationstaktgrenze t0F kann der Wirkzeitpunkt der Ausgabe des Folgesollwertes t10F ermittelt werden, indem die bekannte Ausgabezeit der Folgeachse T10F addiert wird. Nach dieser Zeitspanne der Ausgabezeit der Folgeachse T10F ist das Ereignis, welches für die Leitwertanpassung gemäß dem ersten Ausführungsbeispiel verwendet wird, an der Folgeachse eingetreten. Dieser Wirkzeitpunkt der Ausgabe des Folgesollwertes t10F wird nun im einheitlichen Zeitsystem t mit dem Wirkzeitpunkt der Ausgabe des Leitsollwertes t10L verglichen und es wird insbesondere die Differenz dieser beiden Zeitpunkte ermittelt. Dies ergibt die Zeitdifferenz ΔT10.

Das Vorzeichen des Ergebnisses bei dieser Subtraktion ergibt die Verschiebung des Leitwertes zeitlich vor oder zurück auf der Zeitachse.

Die Zeitdifferenz ΔT10 wird nun genutzt, um einen angepassten Leitwert zu berechnen, welcher zu dem um die Zeitdifferenz ΔT10 ausgehend vom Ausgangszeitpunkt t0L verschobenen Zeitpunkt gehört. Bei diesem angepassten Leitwert handelt es sich um den Leitwert, welcher vorteilhafterweise von der Folgeachse zu deren Interpolationstaktgrenze t0F für die Gleichlauffunktion verwendet werden sollte.

Für das vorgestellte Verfahren sind die Interpolationstakte an Leit- und Folgeachse nicht notwendigerweise aufeinander abgestimmt oder synchronisiert oder gleich lang. Aufgrund des Bezugs zur gemeinsamen Systemzeit ist die Anpassung des Leitwertes durch die Folgeachse über den Berechnungsschritt der Wirkzeitpunkte analoger Ereignisse an Folgeachse und Leitachse nicht von einem bekannten oder ermittelbaren oder festen zeitlichen Bezug der jeweiligen Interpolationstakte und deren Grenzen abhängig. Dies ermöglicht einen präzisen Gleichlauf auch für verteilten Gleichlauf mit unterschiedlichen Interpolationstakten oder zeitlich in unbestimmter Beziehung bestehenden Interpolationstakten der Folgeachse und der Leitachse.

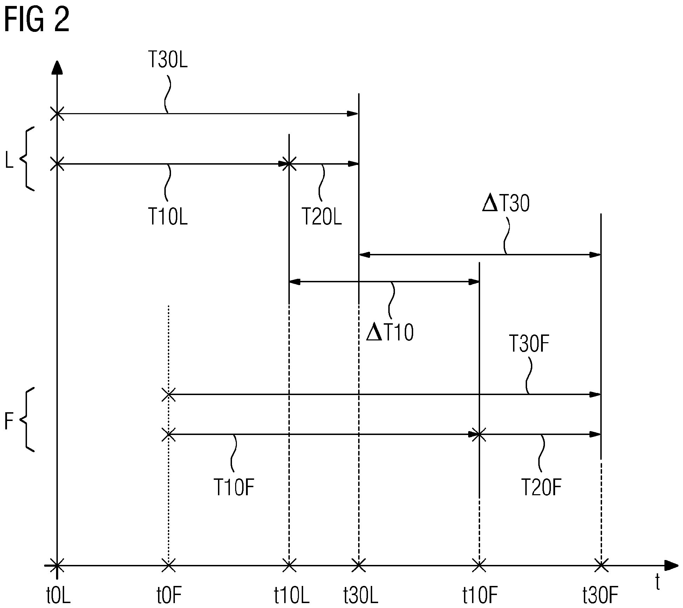

Figur 2 veranschaulicht die Anpassung des Leitwertes gemäß einem zweiten Ausführungsbeispiel der Erfindung, bei dem auf das jeweilige Erreichen der Istpositionen an Leit- und Folgeachse abgestellt wird.

Zur besseren Verständlichkeit sind in das Diagramm aus Figur 1 zusätzliche charakteristische zu ermittelnde Zeitpunkte und Zeitspannen für das zweite Ausführungsbeispiel mit eingetragen worden.

An der Leitachse in der oberen Hälfte des Diagramms ist anschließend an den Zeitpunkt t10L, zu dem der Basis-Leitwert ausgegeben wurden, die Zeitspanne T20L eingetragen, die vergeht, bis an der Leitachse L die Istposition angenommen wurde. Der Wirkzeitpunkt des Erreichens der Istposition an der Leitachse ist mit dem Zeichen t30L gekennzeichnet. Eine effektive Ausgabezeit T30L bis zur Einnahme der Istposition an der Leitachse ab Interpolationstaktgrenze der Leitachse setzt sich also insbesondere zusammen aus der Ausgabezeit des Leitwertes T10L und der Zeitspanne T20L bis zum Erreichen der Istposition ab Ausgabe des Leitwertes.

Den Wert des Wirkzeitpunktes der Istposition an der Leitachse t30L ermittelt die Folgeachse beispielsweise aus einem Telegramm der Leitachse oder berechnet ihn aus Angaben zu Interpolationstaktgrenzen der Leitachse und Sollwert-Ausgabezeiten oder der effektiven Ausgabezeit der Istwerte, die entweder direkt von der Leitachse oder von einem Anwender bereitgestellt wurden oder werden.

Analog wird an der Folgeachse der Wirkzeitpunkt des Erreichens der Istposition für den im aktuellen Interpolationstakt für die nächste Interpolationstaktgrenze der Folgeachse zu berechnenden Sollwert ermittelt. Dazu ist beispielsweise die effektive Ausgabezeit T30F der Istwerte an der Folgeachse bekannt. Ausgehend von der Interpolationstaktgrenze t0F, die im Zeitsystem der Folgeachse bekannt ist, wird so der Wirkzeitpunkt des Erreichens der Istpositionen t30F ermittelt. Auch hier ist in einer Variante des Verfahrens denkbar, dass der Wirkzeitpunkt des Erreichens der Istpositionen t30F stückweise berechnet wird aus der Ausgabezeit der Sollwerte T10F und einer Zeitspanne T20F, bis die Istwerte ab Ausgabe der Sollwerte t10F erreicht werden.

Der zeitliche Abstand ΔT30 der beiden Wirkzeitpunkte des Erreichens der Sollwerte an den jeweiligen Achsen t30L und t30F wird sodann verwendet, um den Leitwert anzupassen. An der Folgeachse findet im ersten und im zweiten Ausführungsbeispiel eine Extrapolation des Basis-Leitwertes statt. Als für die Gleichlauffunktion optimierter Leitwert wird somit ein zeitlich nachfolgender Leitwert als angepasster Leitwert verwendet.

Das Verfahren zur Berechnung des angepassten Leitwertes berücksichtigt somit bei verteiltem Gleichlauf die Kommunikationszeiten für die Leitwertübertragung sowie effektive Ausgabezeiten an den jeweiligen Achsen. Die jeweiligen Ausgabezeiten der Sollwerte oder effektiven Ausgabezeiten bis Erreichen der Istwerte können durch unterschiedliche Interpolationstaktlängen oder jeweilige Zeiten für die Bereitstellung der Werte im Servo oder benötigte Zeiten im Antrieb bis zum Ausgabebeginn oder an einer Achse eingestellte Sollwertausgabeverzögerungszeiten oder Sollwertfilterzeiten im Sollwertzweig zur Dynamikanpassung oder unterschiedliche Kommunikationszeiten der Achsen hin zum Antrieb oder ein individuell unterschiedliches Prozessverhalten der Achsen bei eingestellter Vorsteuerung oder ohne Vorsteuerung oder weitere einstellbare Zeiten bedingt sein.

Für eine weitere Folgeachse F' (nicht dargestellt) kann eine Anpassung des Basisleitwertes, der von der Leitachse L ausgegeben wird, an der weiteren Folgeachse F' auf die gleiche Weise und unabhängig von der Anpassung der Folgeachse F erfolgen.

Auch die weitere Folgeachse F' kann sich den angepassten Leitwert ermitteln, sofern die Informationen über die Leitachsdaten vorliegen. Somit kann gerade bei einem verteilten Gleichlauf mit mehreren Folgeachsen auf besonders vorteilhafte Weise individuell je Folgeachse F, F' der Leitwert optimiert werden, so dass beispielsweise jeweils die Zeitpunkte des Erreichens der Istpositionen an der Folgeachsen F verglichen mit der Leitachse L sowie der weiteren Folgeachse F' verglichen mit der Leitachse L und somit auch insgesamt optimiert zusammenfallen. Dabei kann die jeweilige Zeitdifferenz, die zum Berechnen des angepassten Leitwertes ermittelt wird, für die Folgeachse und eine weitere Folgeachse F' unterschiedlich ausfallen, d.h. eine unterschiedliche Länge oder zeitliche Länge aufweisen oder sogar ein unterschiedliches Vorzeichen, so dass die Anpassung des Leitwertes je Folgeachse jeweils individuell zeitlich vor oder zurück erfolgen kann. Dies bedeutet, dass der angepasste Leitwert über eine Extrapolation oder Interpolation, insbesondere unterschiedlich je nach Folgeachse, angepasst werden kann. Hierbei wird die verbesserte Leitwertberechnung folgeachsenseitig und die Flexibilität bei einem verteilten Gleichlauf mit mehreren Folgeachsen besonders deutlich.

Je nach Einsatzgebiet der Gleichlauffunktion sind tendenziell Extrapolationen der Leitwerte oder Interpolationen der Leitwerte zu erwarten. Für Anwendungen, in welchen eine besonders hohe Genauigkeit des Gleichlaufes gefordert ist, arbeiten die Leitachsen beispielsweise mit Sollwertausgabeverzögerungen und nehmen somit Verzögerungen in Kauf, um dann an den Folgeachsen eine Interpolation des Leitwertes anwenden zu können. Die Interpolation stützt sich auf Leitwerte, welche bereits aufgezeichnet wurden, so dass eine Ausgabe eines Folgesollwertes zwar verzögert aber mit größerer Genauigkeit erfolgen kann. Für Anwendungen wie beispielsweise für Druckmaschinen ist dies besonders vorteilhaft.

In anderen Anwendungen, wie beispielsweise für Verpackungsapplikationen, in welchen eine kurze Reaktionszeit gefordert ist, wird an der Folgeachse eher eine durch Extrapolation des Leitwertes verminderte Genauigkeit hingenommen zugunsten einer kürzeren Reaktionszeit.

Die beiden Ausführungsbeispiele zeigen in der Gegenüberstellung mit Hilfe der Figur 2, welche beide Ausführungen im gleichen Diagramm enthält, dass sich je nach den eingesetzten Systemen und Achsen, die im Gleichlauf betrieben werden sollen, auch nach den Wirkzeitpunkten der Ausgabe der Sollwerte an den jeweiligen Achsen t10L und t10F bis zum Wirkzeitpunkt des Erreichens der jeweiligen Istwerte t30L und t30F nochmal Abweichungen an den verschiedenen Achsen ergeben können. Mit anderen Worten sieht man, dass nicht nur die Ausgabezeiten der Sollwert T10L und T10F voneinander abweichen, sondern auch die Zeitspannen die ab Ausgabe der Sollwerte bis zum Erreichen der Istwerte vergehen T20L und T20F. Somit kann es in Anwendungen besonders sinnvoll sein, als relevantes Ereignis für das Bilden der Zeitdifferenz das Erreichen der Istpositionen an der jeweiligen Achse festzulegen. In Anwendungen, in welchen beispielsweise die zunächst ungleichlangen Zeitspannen T20L und T20F für Leitachse und Folgeachse aktiv angeglichen werden können, so dass beide durch Verzögerungen in einer der Achsen gleich lange dauern, kann als relevantes Ereignis die Ausgabe der Sollwerte verwendet werden.

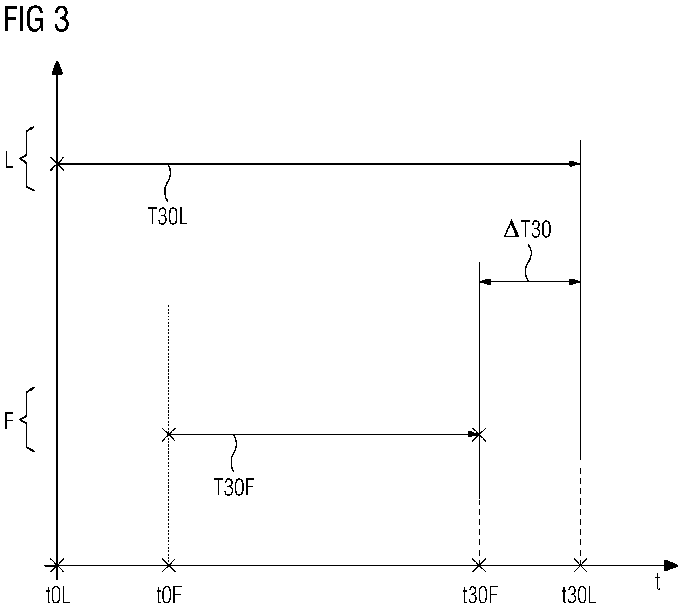

In Figur 3 ist das Zeitdiagramm für ein drittes Ausführungsbeispiel dargestellt, in dem das Erreichen der Istposition an der Leitachse zeitlich nachfolgend zum Erreichen der Istposition an der Folgeachse erfolgt. Für einen solchen Fall wird ebenso die Zeitdifferenz ΔT30 bestimmt. Diese Zeitdifferenz ΔT30 führt zur Anpassung des Leitwertes durch Interpolation. D.h., dass die Folgeachse für das Durchführen der Gleichlauffunktion an der nächsten Interpolatortaktgrenze einen angepassten Leitwert verwendet, der zugehörig zu einem früheren Zeitpunkt als der Basis-Leitwert ist.

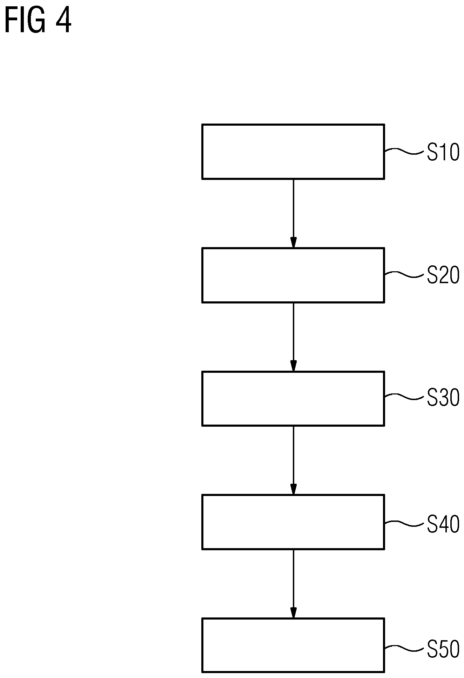

Figur 4 zeigt schematisch ein Ablaufdiagramm von an der Folgeachse durchzuführenden Verfahrensschritten gemäß einem vierten Ausführungsbeispiel der Erfindung. Beispielsweise erfolgt in einem ersten Schritt S10 ein Berechnen des Wirkzeitpunktes des relevanten Ereignisses an der Folgeachse. Dieser ist nicht bereits über den Zeitpunkt der Interpolationstaktgrenze bestimmt, sondern durch Addition weitere Zeitspannen wie oben beschrieben zu ermitteln. In einem zweiten Schritt S20 wird folgeachsenseitig der Zeitpunkt des relevanten Ereignisses an der Leitachse berechnet. Dieser Zeitpunkt des Wirkzeitpunktes ist bekannt über den zum Basis-Leitwert mitgegebenen Zeitstempel, oder über zusätzliche Daten zum Zeitstempel, wenn er nicht direkt im Zeitstempel enthalten ist. Die Verfahrensschritte S10 und S20 können in beliebiger Reihenfolge durchgeführt werden.

Darauffolgend wird in einem dritten Schritt S30 die Zeitdifferenz ΔT10 oder ΔT30 berechnet. Diese wird - bezugnehmend auf die Bezugszeichen der Figur 2 - basierend auf den absoluten Zeitpunktwerten t10L und t10F bzw. t30L und t30F im gemeinsamen Zeitsystem t ermittelt werden, wobei ein Bezugspunkt, wie insbesondere eine gemeinsame Interpolationstaktgrenze beider Achsen, nicht notwendig ist.

In einem vierten Schritt S40 wird der Leitwert angepasst. Es findet eine Umrechnung des Basisleitwertes, der zum Ausgangszeitpunkt t0L zugehörig ist, auf denjenigen Leitwert statt, welcher zum um die Zeitdifferenz ΔT10 oder ΔT30 verschobenen Zeitpunkt zugehörig ist.

In einer Gleichlaufanwendung erfolgt sodann noch der fünfte Schritt S50, in dem die Gleichlauffunktion auf den angepassten Leitwert angewendet wird, um einen möglichst geeigneten Folgesollwert zu bestimmen, der zu einem besonders gut übereinstimmenden Gleichlauf zwischen Leitachse und Folgeachse führt.

## Patentansprüche

1. Verfahren zum Bestimmen eines angepassten Leitwertes einer Leitachse (L), wobei aus dem angepassten Leitwert mittels einer Gleichlauffunktion ein Folgesollwert (t10F) für eine Folgeachse (F) ableitbar ist und anhand des Folgesollwertes (t10F) ein Antrieb an der Folgeachse (F) im Gleichlauf mit der Leitachse (L) betrieben wird, **dadurch gekennzeichnet, dass** der angepasste Leitwert basierend auf einem Basis-Leitwert der Leitachse (L) und einer Zeitdifferenz (ΔT10, ΔT30) von Wirkzeitpunkten (t10L, t10F, t30L, t30F) festlegbarer Ereignisse an der Leitachse (L) und Folgeachse (F) bestimmt wird, wobei die Zeitdifferenz (ΔT10, ΔT30) in einem gemeinsamen Zeitbezugssystem angegeben wird, wobei es sich bei den festlegbaren Ereignissen an der Leitachse (L) und an der Folgeachse (F) um zueinander gehörige oder äquivalente Ereignisse handelt.

2. Verfahren nach Anspruch 1, wobei die Wirkzeitpunkte (t10L, t10F, t30L, t30F) auf eine der Leitachse (L) und Folgeachse (F) gemeinsame Systemzeit (t) Bezug nehmen.

3. Verfahren nach Anspruch 2, wobei die gemeinsame Systemzeit (t) der Zeitsysteme der Leitachse (L) und der Folgeachse (F) aufgrund einer gemeinsamen Uhrzeit besteht oder herstellbar ist.

4. Verfahren nach Anspruch 2 oder 3, wobei dem Basis-Leitwert und/ oder dem Folgesollwert (t10F) jeweils ein Zeitstempel zugeordnet wird und sich der Zeitstempel auf die gemeinsame Systemzeit (t) bezieht.

5. Verfahren nach einem der vorstehenden Ansprüche, wobei als festlegbare Ereignisse eine Ausgabe des Leitwertes an der Leitachse (L) und eine Ausgabe des Folgesollwertes (t10F) an der Folgeachse (F) festgelegt werden.

6. Verfahren nach einem der vorstehenden Ansprüche, wobei als festlegbare Ereignisse ein Erreichen eines Leitistwertes an der Leitachse (L) und eines Folgeistwertes an der Folgeachse (F) festgelegt werden.

7. Verfahren nach einem der vorstehenden Ansprüche, wobei der angepasste Leitwert an der Folgeachse (F) und/ oder an einem Stellvertreter der Leitachse (L) in einem System der Folgeachse (F) bestimmt wird.

8. Verfahren nach Anspruch 5, wobei an der Folgeachse (F) oder einem Stellvertreter die Ausgabe des Leitwertes an der Leitachse anhand eines Ausgangszeitpunktes (tOL) und einer Ausgabezeit der Leitachse (T10L) oder anhand eines Wirkzeitpunktes des Ereignisses der Ausgabe des Leitwertes (t10L) bestimmt wird (S20).

9. Verfahren nach Anspruch 6, wobei an der Folgeachse (F) oder einem Stellvertreter das Erreichen des Leitistwertes an der Leitachse anhand eines Ausgangszeitpunktes (tOL) und einer effektiven Ausgabezeit der Leitachse (T30L) oder anhand eines Wirkzeitpunktes des Ereignisses des Erreichens der Istposition an der Leitachse (t30L) bestimmt wird (S20).

10. Verfahren nach Anspruch 8, wobei an der Folgeachse (F) oder dem Stellvertreter der Ausgangszeitpunkt (tOL) und die Ausgabezeit des Leitwertes (T10L) oder wobei an der Folgeachse (F) oder dem Stellvertreter der Wirkzeitpunkt des Ereignisses der Ausgabe des Leitwertes (t10L) bereitgestellt werden.

11. Verfahren nach Anspruch 10, wobei der Ausgangszeitpunkt (tOL) und die Ausgabezeit des Leitwertes (T10L) oder wobei der Wirkzeitpunkt des Ereignisses der Ausgabe des Leitwertes (t10L) in einem Zeitstempel des Basisleitwertes enthalten sind oder als Angaben in einem Zeitstempel gemeinsam mit dem Basisleitwert übertragen werden.

12. Verfahren nach Anspruch 9, wobei an der Folgeachse (F) oder dem Stellvertreter der Ausgangszeitpunkt (tOL) und die effektive Ausgabezeit der Leitachse (T30L) oder wobei an der Folgeachse (F) oder dem Stellvertreter der Wirkzeitpunkt des Ereignisses des Erreichens der Istposition an der Leitachse (t30L) bereitgestellt werden.

13. Verfahren nach Anspruch 12, wobei der Ausgangszeitpunkt (tOL) und die effektive Ausgabezeit der Leitachse (T30L) oder wobei der Wirkzeitpunkt des Ereignisses des Erreichens der Istposition an der Leitachse (t30L) in einem Zeitstempel des Basisleitwertes enthalten sind oder als Angaben in einem Zeitstempel gemeinsam mit dem Basisleitwert übertragen werden.

14. Verfahren nach Anspruch 5, 8, 10 oder 11, wobei die Ausgabe des Folgesollwertes an der Folgeachse (F) anhand eines zum Berechnungszeitpunkt zugehörigen Ausgangszeitpunktes (t0F), insbesondere einer nächsten Interpolationstaktgrenze der Folgeachse (F), und einer Ausgabezeit zur Ausgabe des Folgesollwertes bestimmt wird (S10) .

15. Verfahren nach Anspruch 6, 9, 12 oder 13, wobei das Erreichen des Folgeistwertes an der Folgeachse (F) anhand eines zum Berechnungszeitpunkt zugehörigen Ausgangszeitpunktes (toF), insbesondere einer nächsten Interpolationstaktgrenze der Folgeachse (F), und einer effektiven Ausgabezeit der Folgeachse (T30F) bestimmt wird (S10) .

16. Verfahren nach einem der vorstehenden Ansprüche, wobei der Basis-Leitwert sowie der angepasste Leitwert eine Leitwertposition oder eine Leitwertposition und eine Leitwertgeschwindigkeit aufweisen.

17. Verfahren nach einem der vorstehenden Ansprüche, wobei der zu einem Ausgangszeitpunkt der Leitachse (tOL) zugehörige Basis-Leitwert korrigiert wird, indem der angepasste Leitwert zu einem ausgehend von dem Ausgangszeitpunkt der Leitachse (tOL) um die Zeitdifferenz (ΔT10, ΔT30) verschobenen Zeitpunkt bestimmt wird (S40).

18. Verfahren nach Anspruch 17, wobei der angepasste Leitwert für den ausgehend von dem Ausgangszeitpunkt der Leitachse (tOL) um die Zeitdifferenz (ΔT10, ΔT30) verschobenen Zeitpunkt ausgehend von dem Basis-Leitwert extrapoliert oder interpoliert wird.

19. Verfahren nach einem der vorstehenden Ansprüche, wobei der angepasste Leitwert als ein zu einer nächsten Interpolationstaktgrenze eines Interpolationstaktes der Folgeachse anzuwendender Leitwert ermittelt wird.

20. Verfahren nach einem der vorstehenden Ansprüche, wobei jeweilige Antriebe der Folgeachse (F) und der Leitachse (L) oder der Folgeachse (F) und einer weiteren Folgeachse (F') der Leitachse im Gleichlauf zueinander betrieben werden (S50) .

21. Steuerungskomponente zur Steuerung eines Antriebs einer Folgeachse (F) basierend auf Leitwerten einer Leitachse, ausgebildet zur Durchführung eines Verfahrens nach einem der vorstehenden Ansprüche.

22. Steuerungskomponente nach Anspruch 21, wobei eine Steuerungskomponente zur Steuerung eines Antriebs der Leitachse (L) separat ausgebildet ist und die Steuerungskomponenten über eine Busverbindung miteinander kommunizieren.

23. Steuerungskomponente nach Anspruch 21, zugleich ausgebildet zur Steuerung eines Antriebs der Leitachse (L).

## Claims

1. Method for determining an adapted master value of a master axis (L), wherein a setpoint slave value (t10F) for a slave axis (F) is derivable from the adapted master value by means of a synchronism function and a drive on the slave axis (F) is operated in synchronism with the master axis (L) on the basis of the setpoint slave value (t10F), **characterized in that** the adapted master value is determined on the basis of a base master value of the master axis (L) and a time difference (ΔT10, ΔT30) of operative times (t10L, t10F, t30L, t30F) of determinable events on the master axis (L) and slave axis (F), wherein the time difference (ΔT10, ΔT30) is specified in a common time reference system, wherein the determinable events on the master axis (L) and on the slave axis (F) are events that belong to one another or are equivalent events.

2. Method according to Claim 1, wherein the operative times (t10L, t10F, t30L, t30F) refer to a system time (t) that is common to the master axis (L) and slave axis (F).

3. Method according to Claim 2, wherein the common system time (t) of the time systems of the master axis (L) and the slave axis (F) exists or is establishable on the basis of a common clock time.

4. Method according to Claim 2 or 3, wherein a timestamp is assigned to the base master value and/or the setpoint slave value (t10F) in each case and the timestamp relates to the common system time (t).

5. Method according to any one of the preceding claims, wherein an output of the master value on the master axis (L) and an output of the setpoint slave value (t10F) on the slave axis (F) are determined as determinable events.

6. Method according to any one of the preceding claims, wherein an actual master value being reached on the master axis (L) and an actual slave value being reached on the slave axis (F) are determined as determinable events.

7. Method according to any one of the preceding claims, wherein the adapted master value is determined on the slave axis (F) and/or on a proxy of the master axis (L) in a system of the slave axis (F).

8. Method according to Claim 5, wherein the output of the master value on the master axis is determined (S20) on the slave axis (F) or a proxy on the basis of an initial time (tOL) and an output time of the master axis (T10L) or on the basis of an operative time of the event of the output of the master value (t10L).

9. Method according to Claim 6, wherein the actual master value being reached on the master axis is determined (S20) on the slave axis (F) or a proxy on the basis of an initial time (tOL) and an effective output time of the master axis (T30L) or on the basis of an operative time of the event of the actual position being reached on the master axis (t30L).

10. Method according to Claim 8, wherein the initial time (t0L) and the output time of the master value (T10L) are provided on the slave axis (F) or the proxy or wherein the operative time of the event of the output of the master value (t10L) is provided on the slave axis (F) or the proxy.

11. Method according to Claim 10, wherein the initial time (tOL) and the output time of the master value (T10L) are contained in a timestamp of the base master value or transmitted as data in a timestamp together with the base master value or wherein the operative time of the event of the output of the master value (t10L) is contained in a timestamp of the base master value or transmitted as data in a timestamp together with the base master value.

12. Method according to Claim 9, wherein the initial time (tOL) and the effective output time of the master axis (T30L) are provided on the slave axis (F) or the proxy or wherein the operative time of the event of the actual position being reached on the master axis (t30L) is provided on the slave axis (F) or the proxy.

13. Method according to Claim 12, wherein the initial time (tOL) and the effective output time of the master axis (T30L) are contained in a timestamp of the base master value or transmitted as data in a timestamp together with the base master value or wherein the operative time of the event of the actual position being reached on the master axis (t30L) is contained in a timestamp of the base master value or transmitted as data in a timestamp together with the base master value.

14. Method according to Claim 5, 8, 10 or 11, wherein the output of the setpoint slave value on the slave axis (F) is determined (S10) on the basis of an initial time (t0F) associated with the calculation time, in particular a next interpolation cycle boundary of the slave axis (F), and an output time for outputting the setpoint slave value.

15. Method according to Claim 6, 9, 12 or 13, wherein the actual slave value being reached on the slave axis (F) is determined (S10) on the basis of an initial time (t0F) associated with the calculation time, in particular a next interpolation cycle boundary of the slave axis (F), and an effective output time of the slave axis (T30F).

16. Method according to any one of the preceding claims, wherein the base master value and the adapted master value have a master value position or a master value position and a master value speed.

17. Method according to any one of the preceding claims, wherein the base master value associated with an initial time of the master axis (tOL) is corrected by virtue of the adapted master value being determined (S40) at a time that, proceeding from the initial time of the master axis (t0L), is shifted by the time difference (ΔT10, ΔT30).

18. Method according to Claim 17, wherein the adapted master value for the time shifted by the time difference (ΔT10, ΔT30) proceeding from the initial time of the master axis (tOL) is extrapolated or interpolated proceeding from the base master value.

19. Method according to any one of the preceding claims, wherein the adapted master value is ascertained as a master value to be applied up to a next interpolation cycle boundary of an interpolation cycle of the slave axis.

20. Method according to any one of the preceding claims, wherein respective drives of the slave axis (F) and the master axis (L), or of the slave axis (F) and a further slave axis (F') of the master axis, are operated (S50) in synchronism with one another.

21. Control component for controlling a drive of a slave axis (F) on the basis of master values of a master axis, embodied to carry out a method according to any one of the preceding claims.

22. Control component according to Claim 21, wherein a control component for controlling a drive of the master axis (L) has a separate embodiment and the control components communicate with one another via a bus connection.

23. Control component according to Claim 21, simultaneously embodied to control a drive of the master axis (L).

## Revendications

1. Procédé de détermination d'une valeur maître ajustée d'un axe maître (L), dans lequel une valeur de consigne asservie (t10F) pour un axe asservi (F) peut être déduite de la valeur maître ajustée au moyen d'une fonction de synchronisation, et un entraînement sur l'axe asservi (F) en synchronisme avec l'axe maître (L) est actionné à l'aide de la valeur de consigne asservie (t10F), **caractérisé en ce que** la valeur maître ajustée est déterminée sur la base d'une valeur maître de base de l'axe maître (L) et d'une différence de temps (ΔT10, ΔT30) d'instants effectifs (t10L, t10F, t30L, t30F) d'événements pouvant être définis sur l'axe maître (L) et l'axe maître (F), dans lequel la différence de temps (ΔT10, ΔT30) peut être indiquée dans un système de référence de temps commun, dans lequel les événements pouvant être définis sur l'axe maître (L) et sur l'axe asservi (F) sont des événements associés les uns aux autres ou équivalents.

2. Procédé selon la revendication 1, dans lequel les temps d'action (t10L, t10F, t30L, t30F) se rapportent à un temps de système (t) commun à l'axe maître (L) et à l'axe asservi (F).

3. Procédé selon la revendication 2, dans lequel le temps de système commun (t) des systèmes de temps de l'axe maître (L) et de l'axe asservi (F) existe ou peut être établi sur la base d'une heure commune.

4. Procédé selon la revendication 2 ou 3, dans lequel un horodatage est associé à la valeur maître de base et/ou la valeur de consigne asservie (t10F) et l'horodatage se rapporte au temps de système commun (t).

5. Procédé selon l'une des revendications précédentes, dans lequel une sortie de la valeur maître sur l'axe maître (L) et une sortie de la valeur de consigne asservie (t10F) sur l'axe asservi (F) sont définies comme événements pouvant être définis.

6. Procédé selon l'une des revendications précédentes, dans lequel l'atteinte d'une valeur réelle maître sur l'axe maître (L) et d'une valeur réelle asservie sur l'axe asservi (F) sont définies comme des événements pouvant être définis.

7. Procédé selon l'une des revendications précédentes, dans lequel la valeur maître ajustée est déterminée sur l'axe asservi (F) et/ou sur un substitut de l'axe maître (L) dans un système de l'axe asservi (F).

8. Procédé selon la revendication 5, dans lequel la sortie de la valeur maître (t10L) sur l'axe maître est déterminée (S20) sur l'axe asservi (F) ou un substitut à l'aide d'un temps de départ (tOL) et d'un temps de sortie de l'axe maître (T10L) ou à l'aide d'un temps effectif de l'événement de la sortie de la valeur maître (t10L).

9. Procédé selon la revendication 6, dans lequel, sur l'axe asservi(F) ou un substitut, l'atteinte de la valeur réelle maître sur l'axe maître est déterminée (S20) à l'aide d'un temps de départ (tOL) et d'un temps de sortie effectif de l'axe maître (T30L) ou à l'aide d'un temps effectif de l'événement d'atteinte de la position réelle sur l'axe maître (t30L).

10. Procédé selon la revendication 8, dans lequel le temps de départ (tOL) et le temps de sortie de la valeur maître (T10L) sont rendus disponibles sur l'axe asservi (F) ou le substitut, ou dans lequel le temps effectif de l'événement de la sortie de la valeur maître (t10L) est rendu disponible sur l'axe asservi (F) ou le substitut.

11. Procédé selon la revendication 10, dans lequel le temps de départ (t0L) et le temps de sortie de la valeur maître (T10L) ou dans lequel le temps effectif de l'événement de la sortie de la valeur maître (t10L) sont contenus dans un horodatage de la valeur maître de base ou sont transmises sous forme d'informations dans un horodatage avec la valeur maître de base.

12. Procédé selon la revendication 9, dans lequel le temps de départ (t0L) et le temps de sortie effectif de l'axe maître (T30L) sont rendus disponible sur l'axe asservi (F) ou le substitut, ou dans lequel le temps effectif de l'événement d'atteinte de la position réelle sur l'axe asservi (F) ou le substitut est rendu disponible sur l'axe maître (t30L).

13. Procédé selon la revendication 12, dans lequel le temps de départ (t0L) et le temps de sortie effectif de l'axe maître (T30L) ou dans lequel le temps effectif de l'événement d'atteinte de la position réelle sur l'axe maître (t30L) sont contenus dans un horodatage de la valeur maître de base ou sont transmis en tant qu'informations dans un horodatage avec la valeur maître de base.

14. Procédé selon la revendication 5, 8, 10 ou 11, dans lequel la sortie de la valeur de consigne asservi sur l'axe asservi (F) est déterminée (S10) à l'aide d'un temps de départ (t0F) associé à un temps de calcul, notamment une prochaine limite de cycle d'interpolation de l'axe asservi (F), et un temps de sortie afin de sortir la valeur de consigne asservie.

15. Procédé selon la revendication 6, 9, 12 ou 13, dans lequel l'atteinte de la valeur réelle asservie sur l'axe asservi(F) est déterminée (S10) à l'aide d'un temps de départ (toF) associé à un temps de calcul, notamment une prochaine limite de cycle d'interpolation de la valeur asservie (F), et un temps de sortie effectif de l'axe asservi (T30F).

16. Procédé selon l'une des revendications précédentes, dans lequel la valeur maître de base et la valeur maître ajustée ont une position de valeur maître ou une position de valeur maître et une vitesse de valeur maître.

17. Procédé selon l'une des revendications précédentes, dans lequel la valeur maître de base associée à un temps de départ de l'axe maître (tOL) est corrigée en déterminant (S40) la valeur maître ajustée à un temps décalé de la différence de temps (ΔT10, ΔT30) à partir du temps de départ de l'axe maître (t0L).

18. Procédé selon la revendication 17, dans lequel la valeur maître ajustée pour le temps décalé de la différence de temps (ΔT10, ΔT30) à partir du temps de départ de l'axe maître (tOL) est extrapolée ou interpolée à partir de la valeur maître de base.

19. Procédé selon l'une des revendications précédentes, dans lequel la valeur maître ajustée est déterminée comme valeur maître à appliquer à une prochaine limite de cycle d'interpolation d'un cycle d'interpolation de l'axe asservi.

20. Procédé selon l'une des revendications précédentes, dans lequel les entraînements respectifs de l'axe asservi (F) et de l'axe maître (L) ou de l'axe asservi (F) et d'un axe asservi supplémentaire (F') de l'axe maître sont entraînés (S50) de manière synchrone les uns avec les autres.

21. Composant de commande permettant de commander un entraînement d'un axe asservi (F) sur la base de valeurs maîtres d'un axe maître, conçu afin de mettre en œuvre un procédé selon l'une des revendications précédentes.

22. Composant de commande selon la revendication 21, dans lequel un composant de commande permettant de commander un entraînement de l'axe maître (L) est conçu séparément et les composants de commande communiquent entre eux via une connexion de bus.

23. Composant de commande selon la revendication 21, conçu conjointement afin de commander un entraînement de l'axe maître (L).
